(19) Europäisches Patentamt

European Patent Office

Office européen des brevets

(11) **EP 0 537 079 B1**

(12) **FASCICULE DE BREVET EUROPEEN**

(45) Date de publication et mention
de la délivrance du brevet:
**09.07.1997 Bulletin 1997/28**

(51) Int. Cl.⁶: **B32B 27/08**, B65D 75/58

(21) Numéro de dépôt: **92402766.7**

(22) Date de dépôt: **09.10.1992**

(54) **Emballage à déchirure aisée**

Verpackung, durch Zerreissen einfach zu öffnen

Packaging, easily opened by tearing

(84) Etats contractants désignés:
**AT BE CH DE DK ES FR GB GR IE IT LI LU MC NL PT SE**

(30) Priorité: **11.10.1991 FR 9112555**

(43) Date de publication de la demande:
**14.04.1993 Bulletin 1993/15**

(73) Titulaire: **SOPLARIL S.A.**
**F-92800 Puteaux (FR)**

(72) Inventeur: **Meilhon, Daniel**
**F-40180 Sort-en-Chalosse (FR)**

(74) Mandataire: **Hirsch, Marc-Roger et al**
**Cabinet Hirsch**
**34 rue de Bassano**
**75008 Paris (FR)**

(56) Documents cités:
**EP-A- 0 206 826**     **GB-A- 732 032**
**US-A- 3 344 975**     **US-A- 4 834 245**

• **PATENT ABSTRACTS OF JAPAN (M-986)18 Juin 1990 & JP-A-20 85 171**

Printed by Rank Xerox (UK) Business Services
2.14.9/3.4

## Description

La présente invention concerne un emballage à déchirure aisée, plus particulièrement pour le fardelage de lots d'objets à emballer tels que boîtes de conserve, bidons, bouteilles ou autres.

Pour le conditionnement et le stockage de lots d'objets les plus divers, on a été substitué, depuis plusieurs années, aux boîtes de carton traditionnelles des films thermoplastiques rassemblant par fardelage un lot d'objets identiques ou différents sous forme de pack. C'est ainsi que, par exemple, on trouve dans le commerce des packs d'objets les plus divers tels que: boîtes de conserve, bouteilles, ou encore bidons sous emballage uniquement de film plastique rétractable.

Ces packs sont fabriqués de façon connue par fardelage. Le fardelage est un procédé consistant à entourer l'ensemble des objets à empaqueter d'un film de résine thermoplastique rétractable qui peut être soudé sur lui-même de façon à former un manchon autour desdits objets regroupés, le serrage pouvant par exemple être obtenu par passage de l'ensemble dans un four à une température permettant à la résine thermoplastique constitutive du film de se ramollir, ce qui supprime ses contraintes internes. A la sortie du four, un refroidissement rapide permet le resserrement du film autour de la charge qu'il ceinture. Ainsi est obtenu un fardeau ou pack très homogène où le film thermoplastique joue le rôle d'une peau en contact étroit avec la surface des objets emballés.

Tous les polymères ou copolymères thermoplastiques sous forme de films rétractables possédant une résistance à la déchirure suffisante peuvent être utilisés dans ce type d'application. Toutefois, les polyoléfines et, plus particulièrement, le polyéthylène ou le polypropylène, ou encore les copolymères de l'éthylène et du propylène avec un monomère insaturé tel que l'acétate de vinyle, sont les plus utilisés industriellement.

Les propriétés de rétractibilité et de résistance à la déchirure demandées aux films thermoplastiques provoquent, dans le cas des emballages connus, des inconvénients au déballage des objets empaquetés. Le film étant difficilement déchirable, il est nécessaire d'exercer une force non négligeable pour étirer le film d'empaquetage afin de dégager le passage des objets contenus dans le pack. Lorsqu'elle est possible, la déchirure s'effectue de façon aléatoire et non contrôlable, ce qui entraîne souvent la chute des objets du pack, ou encore, elle tend à se développer dans le sens de l'extrusion du film. Cette dernière propriété ne présente aucun intérêt. En effet, les films thermoplastiques rétractables utilisables dans cette application d'emballage sont obtenus par extrusion puis enroulés en grosse bobine. Lorsque le film est utilisé, les objets sont empaquetés dans le sens de la longueur du film au fur et à mesure du déroulement de la bobine. Dans ces conditions, les propriétés de déchirure du film dans le sens de l'extrusion, c'est-à-dire dans le sens de la longueur du film, n'apportent aucune facilité à l'ouverture complète ultérieure du pack. Il peut même parfois être nécessaire d'utiliser un outil tranchant, dangereux, en particulier dans le domaine ménager, et risquant de détruire les objets empaquetés.

Afin de faciliter l'ouverture, il a été proposé d'utiliser des fils pris dans l'épaisseur du film formant emballage. Ces fils sont efficaces pour l'ouverture d'objets de faible dimension, mais ne conviennent pas pour les objets de grande taille, tels que les packs. Il a aussi été proposé diverses amorces de déchirure, mais sans succès puisque la déchirure reste difficile et aléatoire.

La présente invention permet de pallier les inconvénients et problèmes de l'art antérieur, et propose d'utiliser un emballage à déchirure aisée formé d'un film thermoplastique rétractable qui possède à la fois les caractéristiques requises lors du fardelage et celles requises lors du déballage. Le film thermoplastique rétractable est formé d'au moins deux résines thermoplastiques coextrudées et se déchire dans le sens sensiblement perpendiculaire à son sens d'extrusion. L'emballage selon la présente invention comporte une amorce de déchirure présentant la forme d'un onglet ou d'une languette orienté sensiblement dans le sens perpendiculaire au sens d'extrusion du film, conduisant à une déchirure sensiblement rectiligne.

Le terme "sensiblement perpendiculaire", tel qu'utilisé dans la présente description, signifie que la déchirure est obtenue selon une direction dont la déviation avec la perpendiculaire est inférieure à 20°.

De préférence, cette déviation est inférieure à 10°.

Le terme "sensiblement rectiligne", tel qu'utilisé dans la présente description, signifie que la déchirure se fait selon une droite, dont les ondulations du bord de la découpe sont de faible amplitude.

Le film thermoplastique rétractable, se déchirant dans le sens sensiblement perpendiculaire au sens d'extrusion avec une déchirure sensiblement rectiligne, est formé de:

(a) au moins une couche de polyoléfine; et
(b) au moins une couche d'un copolymère choisi parmi les copolymères ioniques de:

(1) $\alpha$-oléfines de formule $R\text{-}CH=CH_2$ dans laquelle R est de l'hydrogène ou un radical alkyle possédant de 1 à 8 atomes de carbone,
(2) acides carboxyliques $\alpha,\beta$-éthyléniquement insaturés possédant de 3 à 8 atomes de carbone, et
(3) éventuellement un autre composé monomère monoéthyléniquement insaturé;

lesdits copolymères comportant de 10% à 90% de groupements acides carboxyliques ionisés par neutralisation par des ions métalliques distribués sur le copolymère.

Les ions métalliques possèdent généralement une valence ionisée de 1 à 3 inclus quand l'acide insaturé est un acide monocarboxylique et une valence ionisée de 1 quand l'acide insaturé est un acide dicarboxylique. Les ions métalliques peuvent être choisis dans le groupe des ions métalliques complexés et non complexés.

Les copolymères ioniques les plus couramment utilisés sont choisis parmi les copolymères dans lesquels l'$\alpha$-oléfine est l'éthylène et l'acide carboxylique $\alpha,\beta$ éthyléniquement insaturé est un acide monocarboxylique ou dicarboxylique et dans lesquels les ions métalliques sont des ions métalliques complexés, les métaux appartenant aux groupes II, III, IV-A et VIII de la Table Périodique des Eléments, ou encore sont des ions d'un métal du groupe I de la Table Périodique des Eléments et, plus particulièrement, un ion de métal alcalin.

Ces copolymères ioniques sont connus en eux-mêmes. Ils sont largement décrits, ainsi que leur procédé de fabrication dans le brevet des Etats-Unis d'Amérique n° 3 264 272 dont l'ensemble de la description est intégré par extension à la présente demande.

Ces copolymères sont fabriqués par E.I. Du Pont sous la dénomination commerciale "SURLYN®", par exemple. Un copolymère préféré est le "SURLYN® 1601".

Le terme "polyoléfine" , tel qu'utilisé dans la présente description, signifie des homopolymères d'$\alpha$-oléfines ou des copolymères de ces mêmes oléfines avec un ou plusieurs monomères.

L'homopolymère associé au copolymère ionique est choisi parmi les polymères d'$\alpha$-oléfine de formule $R'-CH=CH_2$ dans laquelle $R'$ est l'hydrogène ou un radical alkyle possédant de 1 à 8 atomes de carbone.

Le copolymère d'$\alpha$-oléfine est un copolymère des $\alpha$-oléfines de formule $R'-CH=CH_2$ citées avec au moins un autre monomère monoéthyléniquement insaturé, tel qu'aliphatique ou aromatique, parmi lesquels on peut citer à titre d'exemple: l'acétate de vinyle, le styrène, et les dérivés (meth)acryliques.

Cet autre monomère peut représenter jusqu'à 20% en poids du copolymère oléfinique, de préférence de 1 à 10% en poids.

Parmi les produits les plus recommandés économiquement, on peut citer les polymères et copolymères de l'éthylène et du propylène tels que le polyéthylène, le polypropylène, les copolymères d'éthylène et de propylène, les copolymères éthylène-acétate de vinyle, les copolymères d'éthylène et de dérivés acryliques, les terpolymères à base d'oléfine, d'acrylate de méthyle et d'acrylate d'éthyle ou encore les mélanges de polyoléfines basses densités linéaires et radicalaires. La polyoléfine sous forme homopolymère préférée est le polyéthylène.

La polyoléfine sous forme copolymère préférée est un copolymère éthylène/acétate de vinyle (EVA).

L'épaisseur totale du film rétractable est généralement comprise entre 30 et 300 $\mu$m et, de préférence, entre 40 et 150 $\mu$m. L'épaisseur totale de copolymère ionique, qu'il soit en une seule ou plusieurs couches, représente de 5 à 70% et, de préférence, de 15 à 40% de l'épaisseur totale du film.

Le film peut être constitué de deux couches, la couche de copolymère ionique représentant alors de préférence environ 20% de l'épaisseur.

Le film peut aussi être constitué de trois ou plusieurs couches, dans ce cas peu importe la disposition les unes par rapport aux autres des couches de polyoléfine et de copolymère ionique. La disposition des couches les unes par rapport aux autres n'a pas d'effet sur la déchirure dans le sens sensiblement perpendiculaire au sens d'extrusion du film. Lorsque le film est constitué de trois couches, les deux couches externes étant formées de polymère ionique, représentent chacune de 10 à 30% de l'épaisseur.

Il n'est également pas exclu d'interposer entre la couche de polyoléfine et la couche de copolymère ionique un liant d'adhésion afin de renforcer éventuellement l'adhérence entre les couches de natures différentes. Ces liants d'adhésion sont connus et couramment utilisés dans les coextrusions classiques; habituellement, ces liants sont des copolymères ou des terpolymères modifiés à base d'éthylène.

Le procédé de fabrication de film consiste en la coextrusion de:

(a) au moins une couche de polyoléfine; et
(b) au moins une couche d'un copolymère choisi parmi les copolymères ioniques de:

(1) $\alpha$-oléfines de formule $R-CH=CH_2$ dans laquelle R est de l'hydrogène ou un radical alkyle possédant de 1 à 8 atomes de carbone,
(2) acides carboxyliques $\alpha,\beta$-éthyléniquement insaturés possédant de 3 à 8 atomes de carbone, et
(3) éventuellement un autre composé monomère monoéthyléniquement insaturé;

lesdits copolymères comportant de 10% à 90% de groupements acides carboxyliques ionisés par neutralisation par des ions métalliques distribués sur le copolymère.

La polyoléfine et le copolymère ionique sont coextrudés dans les conditions habituelles d'extrusion des polyoléfines. De façon générale, il peut s'agir d'une coextrusion tubulaire à partir d'une extrudeuse annulaire dans laquelle est formé un ballon, le matériau subissant ainsi simultanément l'action du gonflage et de l'étirage longitudinal conférant les propriétés de rétraction. Il peut également s'agir d'une coextrusion-cast à partir d'une filière plate; en sortie de filière, le film se refroidit sur un cylindre possédant une vitesse de rotation supérieure au débit du film afin de faire subir à ce dernier une orientation longitudinale. En sortie de filière plate, le film peut également, selon une technique connue, être bi-étiré à plat.

De préférence, le procédé de fabrication de film est la coextrusion-soufflage. La température de la vis pour le copolymère ionique est de 165 à 220°C, de préférence de 170 à 180°C. La température de la vis pour la polyoléfine est de 170 à 220°C, de préférence de 175 à 185°C. La température de la tête d'extrudeuse est de 175 à 230°C, de préférence 185 à 195°C. Le taux de gonflage est de 1 à 4, de préférence 1,5 à 2,5. Le taux de gonflage est défini comme:

$$\frac{\text{diamètre de la bulle}}{\text{diamètre de la filière}}$$

Le taux de tirage est de 2 à 25, de préférence 10 à 20. Le taux de tirage est défini comme:

$$\frac{\text{vitesse tireuse de la bulle}}{\text{vitesse de sortie matière}}$$

La vitesse de bobinage est de 7 à 80 m/mn, de préférence de 20 à 60. L'entrefer d'extrusion est de 0,6 à 2,0 mm, de préférence 1 à 1,4 mm.

Le présent film en association avec le présent système de déchirure conduit à l'emballage à déchirure aisée, objet de la présente invention.

Selon un mode de réalisation de la présente invention, la languette est formée par deux découpes sensiblement parallèles au sens perpendiculaire au sens d'extrusion du film. La languette ou amorce de déchirure comporte de préférence deux languettes disposées tête-bêche et formées par une découpe en forme générale de H.

L'onglet ou la languette est formée de préférence dans une partie de renforcement ou de surépaisseur du film qui est constituée par une étiquette collée ou soudée sur le film. L'étiquette est de préférence prélevée sur une partie du film lui-même et appliquée de sorte que les orientations sensiblement perpendiculaires au sens d'extrusion du film et de l'étiquette formant surépaisseur coïncident. Les deux découpes formant au moins une languette sont écartées l'une de l'autre d'une largeur comprise entre 15 et 40 mm et présentant une longueur d'entaille comprise entre 10 et 25 mm. La marge entre chacune des découpes parallèles des languettes et le bord de la partie de renforcement ou de surépaisseur du film est d'au moins 5 mm et, de préférence, environ 10 mm et la marge longitudinale entre l'extrémité desdites découpes parallèles et le bord longitudinal de ladite partie du film est comprise entre 10 et 20 mm.

La partie de renforcement ou de surépaisseur présente une largeur comprise entre 25 et 50 mm, plus préférablement entre 30 et 50 mm, et une longueur de 40 mm au minimum pour une découpe en H et 30 mm pour une languette simple, et de préférence comprise entre 80 et 120 mm.

D'autres buts, avantages et caractéristiques apparaîtront à la lecture de la description d'un mode de réalisation de l'invention, faite à titre non limitatif et en regard du dessin annexé, où la figure unique 1 représente un fragment d'un film d'enrobage selon l'invention muni de deux languettes d'amorçage de la déchirure prédécoupées en H sur une zone de renforcement du film.

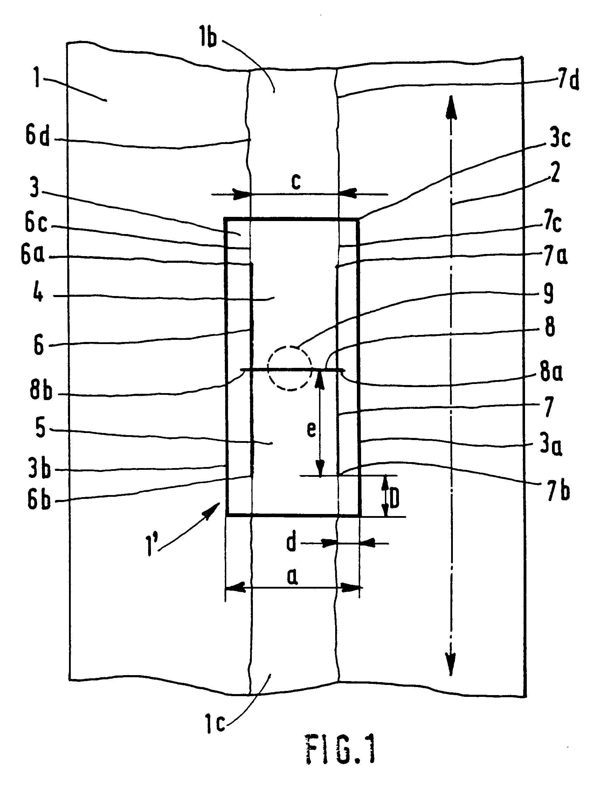

Le fragment d'emballage selon la présente invention, représenté à la figure 1, fait partie d'un film 1 obtenu par extrusion et qui présente un sens de déchirure transversal indiqué par la double flèche 2 et perpendiculaire au sens d'extrusion. Le film 1 comporte une partie en surépaisseur, sur laquelle on a pratiqué une découpe en H, et qui est avantageusement formé par collage d'une étiquette 3 en un matériau déchirable. On peut utiliser, comme matériau déchirable pour l'étiquette 3, du papier coloré qui permet de bien repérer sur le produit emballé la position des languettes 4 et 5 formées à l'intérieur des branches du H. On peut également utiliser une étiquette 3 colorée ou non, prise dans le même film de matériau que le film 1, ce qui conduit selon un mode de réalisation à doubler l'épaisseur du film 1 dans la zone de la découpe en H, assure en général une bonne adhérence à l'étiquette 3 et conserve le caractère de transparence à l'emballage réalisé avec le film 1. La surépaisseur est réalisée dans le même matériau ou un matériau similaire à celui du film et est orientée de sorte que les sens d'extrusion et de déchirure perpendiculaires soient substantiellement parallèles.

La découpe en H est formée de deux traits 6 et 7, sensiblement parallèles entre eux et au sens de déchirage matérialisé par la double flèche 2, reliés par un trait transversal 8. Les traits de découpe 6, 7 et 8 traversent simultanément l'étiquette de renforcement 3 et le film 1 et viennent s'arrêter à leurs extrémités (respectivement: en 6a, 6b pour le trait 6; en 7a et 7b pour le trait 7 et en 8a, 8b pour le trait transversal 8 qui, en fabrication, ne s'arrête généralement pas exactement sur les traits parallèles 6 et 7) à une certaine distance minimale d du bord latéral le plus proche de l'étiquette et à une distance plus importante D de l'extrémité de l'étiquette, dans le sens du déchirage.

L'étiquette 3 présente avantageusement une largeur a comprise entre 25 et 50 mm, plus préférablement entre 30 et 50 mm et une longueur b (non figurée sur le dessin) généralement comprise entre 80 et 120 mm. La largeur c des languettes 4 et 5 doit permettre de glisser un doigt dans la zone centrale 9, matérialisée par un cercle en tirets, de la découpe transversale 8, afin de soulever au moins l'une des languettes (que l'on peut également dénommer onglet car le soulèvement s'effectue en général en s'aidant de l'ongle). Des largeurs de 15 à 40 mm pour la largeur c des languettes correspondent ainsi à la largeur d'un doigt. La longueur d'entaille e des languettes doit être suffisante pour permettre d'assurer une bonne saisie par pincement entre deux doigts mais ne doit pas être trop importante afin d'éviter de fragiliser l'emballage. Une longueur d'entaille e comprise entre 10 et 25 mm paraît convenir à tous les cas d'espèce.

La marge minimale d entre les découpes en H, 6, 7 et 8 des languettes et le bord longitudinal correspondant 3a, 3b de l'étiquette 3 doit être d'au moins 5 mm et la marge D dans le sens de déchirage, c'est-à-dire par rapport au bord longitudinal 3c de l'étiquette 3, peut être comprise entre 10 et 20 mm.

Pour ouvrir un emballage selon l'invention comportant à sa périphérie une étiquette 3 avec les découpes 6, 7, 8, l'opérateur introduit dans la zone 9 un ongle ou un corps formant lame tel que la pointe d'un canif ou d'un tournevis et soulève au moins l'une des languettes 4 et 5. Il saisit alors à la main la languette 4 ou 5 soulevée (par exemple la languette 4) et la tire dans la direction de la double flèche 2 vers l'extrémité la plus proche de l'étiquette. Les prolongements 6c et 7c des traits de découpe 6 et 7 se déchirent en opposant d'abord une certaine résistance puis, au-delà de l'étiquette 3, la déchirure se propage sur les lignes de lacération 6d et 7d sans opposer de résistance sensible, ce qui permet de débarrasser sans effort un objet emballé de sa pellicule d'emballage. Pour accélérer ou faciliter le processus d'enlèvement de l'emballage, notamment pour les gros objets emballés, il est possible de réaliser le déchirage du film 1 par enlèvement simultané ou successif d'une bande de lacération 1b par traction sur la languette 4 et d'une bande de lacération 1c en tirant sur la languette 5. L'une des bandes de lacération 1b ou 1c peut se rompre au cours du déchirage. On achève alors le déchirage en tirant avec précaution sur l'autre bande. On notera également que les traits de découpe 6 et/ou 7 et/ou 8 peuvent être réalisés en tirets pour mieux conserver la résistance de la zone d'étiquette 3 du film 1.

En variante, la découpe peut être réalisée franche sur l'étiquette 3 et en pointillés ou en tirets sur le film 1 sousjacent, l'accès au film 1 prémarqué par les tirets s'obtenant par soulèvement des languettes 4 et 5 de la seule étiquette 3. L'inverse est également possible, les découpes étant franches sur le film 1 et en tirets sur l'étiquette 3; l'accès aux languettes 4 et 5 sur le film est ainsi protégé et exige l'action d'une lame pour détacher les languettes 4 et 5 sur l'étiquette 3. On peut alors avantageusement prévoir sur la zone du cercle 9 de l'étiquette 3 une découpe avec enlèvement de la matière de l'étiquette, ce qui ménage une zone d'accès pour soulever les languettes 4 et 5 avec une lame ou avec l'ongle. Bien entendu, l'étiquette de renforcement ou de surépaisseur 3 peut présenter une épaisseur et une résistance très différente de celle du film 1, notamment afin de renforcer localement celui-ci à l'encontre de l'amorce de déchirage.

Dans les conditions habituelles de fardelage, des objets quelconques tels que des boîtes de conserve sont empaquetés dans un film selon l'invention. Grâce à la simple amorce de déchirure réalisée sous la forme des languettes 4 et 5 découpées dans le sens transversal lors de la fabrication du pack, il est possible, par simple traction sur l'une des languettes, d'ouvrir le pack par déchirure franche du film, sans effort particulier. Avant que l'on n'exerce une action sur l'une ou l'autre languette, le film conserve toutes ses propriétés de rétractabilité et de résistance à la déchirure, requises pour les différentes manipulations du pack.

Outre le fardelage, les emballages selon l'invention sont utilisables dans toute application d'emballage telle que, par exemple, dans la fabrication de housses de palletisation ou pour l'ensachage.

**Revendications**

1. Emballage formé d'un film thermoplastique extrudé rétractable comprenant :

   (a) au moins une couche de polyoléfine;
   (b) au moins une couche d'un polymère choisi parmi les copolymères ioniques de :

      (1) $\alpha$-oléfines de formule R-CH=CH2 dans laquelle R est de l'hydrogène ou un radical alkyle possédant de 1 à 8 atomes de carbone,
      (2) acides carboxyliques $\alpha,\beta$-éthylèniquement insaturés possédant de 3 à 8 atomes de carbone, et
      (3) éventuellement un autre composé monomère mono éthylèniquement insaturé;

   lesdits copolymères comportant de 10% à 90% de groupements acides carboxyliques ionisés par neutralisation par des ions métalliques distribués sur le copolymère;

   caractérisé en ce qu'il comporte une amorce de déchirure présentant la forme d'un onglet ou d'une languette (4), (5), orienté sensiblement dans le sens (2) perpendiculaire au sens d'extrusion du film (1), la déchirure se faisant dans le sens perpendiculaire au sens d'extrusion.

2. Emballage selon la revendication 1, caractérisé en ce que ledit onglet ou ladite languette (4), (5) est formé(e) dans une partie (3) de renforcement ou de surépaisseur du film (1).

3. Emballage selon la revendication 1 ou 2, caractérisé en ce que la partie de renforcement ou de surépaisseur est constituée par une étiquette (3) collée ou soudée sur le film (1).

4. Emballage selon l'une quelconque des revendications 1 à 3, caractérisé en ce que la partie de renforcement ou de surépaisseur (3) est constituée en un matériau similaire à celui du film (1) et orienté selon un sens sensiblement parallèle à celui du film (1).

5. Emballage selon l'une quelconque des revendications 1 à 4, caractérisé en ce que la languette est formée par deux découpes (6, 7) sensiblement parallèles au sens (2) perpendiculaire au sens d'extrusion du film (1).

**6.** Emballage selon l'une quelconque des revendications 1 à 5, caractérisé en ce que l'amorce de déchirure comporte deux languettes (4, 5) disposées tête-bêche et formées par une découpe (6, 7, 8) en forme générale de H.

**7.** Emballage selon l'une quelconque des revendications 1 à 6, caractérisé en ce que les deux découpes (6, 7) formant au moins une languette (4), (5) sont écartées l'une de l'autre d'une largeur (c) comprise entre 15 et 40 mm.

**8.** Emballage selon l'une quelconque des revendications 1 à 7, caractérisé en ce que les deux découpes (6, 7) formant au moins une languette (4), (5) présentent une longueur d'entaille comprise entre 10 et 25 mm.

**9.** Emballage selon l'une quelconque des revendications 1 à 8, caractérisé en ce que la marge (d) entre chacune des découpes parallèles (6, 7) des languettes (4, 5) et le bord (3a, 3b) de la partie (3) de renforcement ou de surépaisseur du film (1) est d'au moins 5 mm et de préférence environ 10 mm.

**10.** Emballage selon l'une quelconque des revendications 1 à 9, caractérisé en ce que la marge longitudinale (D) entre les extrémités (6a, 7a) et (6b, 7b) desdites découpes parallèles (6, 7) des languettes (4, 5) et le bord (3a, 3b) de la partie (3) de renforcement ou de surépaisseur du film (1) et le bord longitudinal (3c) de ladite partie (3) du film (1) est comprise entre 10 et 20 mm.

**11.** Emballage selon l'une quelconque des revendications 1 à 10, caractérisé en ce que la partie (3) de renforcement ou de surépaisseur du film (1) présente une largeur (a) comprise entre 25 et 50 mm et de préférence entre 30 et 50 mm.

**12.** Emballage selon l'une quelconque des revendications 1 à 11, caractérisé en ce que la partie (3) de renforcement ou de surépaisseur du film (1) présente une longueur (b) de 40 mm au minimum et de préférence comprise entre 80 et 120 mm.

**Claims**

**1.** A packaging formed from a shrinkable extruded thermoplastics film comprising:

(a) at least one polyolefin layer; and
(b) at least one layer of a polymer selected from ionic copolymers of:

(1) $\alpha$-olefins of formula R-CH=CH2 wherein R is hydrogen or an alkyl radical having from 1 to 8 carbon atoms,
(2) $\alpha,\beta$-ethylenically unsaturated carboxylic acids having 3 to 8 carbon atoms, and
(3) optionally, a further monoethylenically unsaturated monomer compound;

said copolymers having from 10 to 90% of carboxilic acid groups ionised by neutralization through metallic ions distributed over the copolymer;

characterized in that it includes tear initiating means in the form of a tab or pull member (4), (5) oriented in a direction (2) substantially perpendicular to the direction of extrusion of said film (1), tearing being done in the direction perpendicular to the direction of extrusion.

**2.** The packaging according to claim 1 characterized in that said tab or pull member (4), (5) is formed in a reinforced or thickened portion (3) of said film (1).

**3.** The packaging according to claim 1 or 2, characterized in that the reinforced or thickened portion consists of a label (3) bonded or welded onto the film (1).

**4.** The packaging according to any one of claims 1 to 3, characterized in that the thickened or reinforced portion (3) is constituted of a material similar to that of said film (1) and oriented in a direction substantially parallel to that of said film (1).

**5.** The packaging according to one of claims 1 to 4, characterized in that said tab or pull member is defined by cutting out said film along two lines (6, 7) substantially parallel to a direction (2) perpendicular to the direction of extrusion of said film (1).

**6.** The packaging according to one of claims 1 to 5, characterized in that the tear initiating means comprise two tabs or pull members (4, 5) lying end-to-end and formed by cutting out said film in a generally H-shape (6, 7, 8).

**7.** The packaging according to one of claims 1 to 6, characterized in that the lines (6, 7) along which said film is cut to form said at least one tab (4), (5) are spaced from each other by a width distance (c) comprised in the range from 15 to 40 mm.

**8.** The packaging according to any one of claims 1 to 7, characterized in that the length of the two lines (6, 7) along which said film is cut to form said at least one tab (4), (5) is comprised in the range from 10 to 25 mm.

**9.** The packaging according to any one of claims 1 to 8, characterized in that the border (d) between each of said parallel lines (6, 7) of said tabs or pull members (4, 5) and the edge (3a, 3b) of the reinforced or thickened region of said film (1) is at least 5 mm and preferably about 10 mm.

10. The packaging according to any one of claims 1 to 9, characterized in that the longitudinal border (D) between the ends (6a, 7a) and (6b, 7b) of said parallel lines (6, 7) forming said tabs or pull members (4, 5) and the edge (3a, 3b) of said reinforced or thickened region (3) of said film (1) is comprised between 10 and 20 mm.

11. The packaging according to any one of claims 1 to 10, characterized in that said reinforced or thickened region (3) of said film (1) has a width (a) comprised between 25 and 50 mm and preferably between 30 and 50 mm.

12. The packaging according to any one of claims 1 to 11, characterized in that said reinforced or thickened portion (3) of the film (1) has a length (b) of 40 mm minimum and preferably comprised between 80 and 120 mm.

**Patentansprüche**

1. Verpackung aus einer extrudierten thermoplastischen Schrumpffolie, enthaltend:

   (a) mindestens eine Polyolefinschicht;
   (b) mindestens eine Schicht eines Polymers, ausgewählt aus ionischen Copolymeren von:

   (1) $\alpha$-Olefinen der Formel R-CH=CH$_2$, in der R Wasserstoff oder ein Alkylrest mit 1 bis 8 Kohlenstoffatomen ist,
   (2) $\alpha,\beta$-ethylenisch ungesättigten Carbonsäuren mit 3 bis 8 Kohlenstoffatomen und
   (3) gegebenenfalls einer weiteren, ethylenisch einfach ungesättigten Monomerverbindung;

   wobei die Copolymere 10 % bis 90 % Carbonsäuregruppen enthalten, die durch Neutralisation mit über das Copolymer verteilte Metallionen ionisiert sind;

   dadurch gekennzeichnet, daß die Verpackung ein Zerreißanfangsstück umfaßt, das die Form einer Zunge oder Lasche (4), (5) aufweist, die etwa in senkrechter Richtung (2) zur Extrusionsrichtung des Films (1) ausgerichtet ist, wobei das Zerreißen in senkrechter Richtung zur Extrusionsrichtung erfolgt.

2. Verpackung nach Anspruch 1, dadurch gekennzeichnet, daß der Falz oder die Lasche (4), (5) in einem verstärkten oder verdickten Teil (3) des Films (1) ausgebildet ist.

3. Verpackung nach Anspruch 1 oder 2, dadurch gekennzeichnet, daß der verstärkte oder verdickte Teil aus einem Etikett (3) besteht, das mit dem Film (1) verklebt oder verschweißt ist.

4. Verpackung nach einem der Ansprüche 1 bis 3, dadurch gekennzeichnet, daß der verstärkte oder verdickte Teil (3) aus einem dem Material des Films (1) ähnlichen Material besteht und nahezu parallel zur Richtung des Films (1) ausgerichtet ist.

5. Verpackung nach einem der Ansprüche 1 bis 4, dadurch gekennzeichnet, daß die Lasche durch zwei Zuschnitte (6, 7) gebildet wird, die etwa parallel zu der Richtung (2) verläuft, die rechtwinklig zur Extrusionsrichtung des Films (1) ist.

6. Verpackung nach einem der Ansprüche 1 bis 5, dadurch gekennzeichnet, daß der Zerreißanfang zwei Laschen (4, 5) umfaßt, die entgegengesetzt angeordnet sind und aus einem Zuschnitt (6, 7, 8) in der allgemeinen Form eines H gebildet werden.

7. Verpackung nach einem der Ansprüche 1 bis 6, dadurch gekennzeichnet, daß die zwei Zuschnitte (6, 7), die mindestens eine Lasche (4), (5) bilden, voneinander eine Breite (c) von 15 bis 40 mm entfernt sind.

8. Verpackung nach einem der Ansprüche 1 bis 7, dadurch gekennzeichnet, daß die zwei Zuschnitte (6, 7), die mindestens eine Lasche (4), (5) bilden, eine Einschnittlänge zwischen 10 und 25 mm aufweisen.

9. Verpackung nach einem der Ansprüche 1 bis 8, dadurch gekennzeichnet, daß der Abstand (d) zwischen jedem der parallelen Zuschnitte (6, 7) der Laschen (4, 5) und dem Rand (3a, 3b) des verstärkten oder verdickten Teils (3) des Films (1) mindestens 5 mm, vorzugsweise etwa 10 mm, beträgt.

10. Verpackung nach einem der Ansprüche 1 bis 9, dadurch gekennzeichnet, daß der Längsabstand (D) zwischen den Enden (6a, 7a) und (6b, 7b) der parallelen Zuschnitte (6, 7) der Laschen (4, 5) und dem Rand (3a, 3b) des verstärkten oder verdickten Teils (3) des Films (1) und dem Längsrand (3c) des Teils (3) des Films (1) 10 bis 20 mm beträgt.

11. Verpackung nach einem der Ansprüche 1 bis 10, dadurch gekennzeichnet, daß der verstärkte oder verdickte Teil (3) des Films (1) eine Breite (a) zwischen 25 und 50 mm, vorzugsweise zwischen 30 und 50 mm, aufweist.

12. Verpackung nach einem der Ansprüche 1 bis 11, dadurch gekennzeichnet, daß der verstärkte oder verdickte Teil (3) des Films (1) eine Länge (b) von mindestens 40 mm, vorzugsweise zwischen 80 und 120 mm, aufweist.

FIG.1